(19) Europäisches Patentamt / European Patent Office / Office européen des brevets

(11) **EP 3 890 415 B1**

(12) **EUROPEAN PATENT SPECIFICATION**

(45) Date of publication and mention
of the grant of the patent:
**18.10.2023 Bulletin 2023/42**

(21) Application number: **19909030.9**

(22) Date of filing: **11.01.2019**

(51) International Patent Classification (IPC):
**H04W 72/02** (2009.01)    **H04L 5/00** (2006.01)
**H04W 92/18** (2009.01)

(52) Cooperative Patent Classification (CPC):
**H04L 5/0051;** H04L 5/0007; H04L 5/0053;
H04W 92/18

(86) International application number:
**PCT/CN2019/071486**

(87) International publication number:
**WO 2020/143059 (16.07.2020 Gazette 2020/29)**

(54) **SIDELINK COMMUNICATION METHOD AND TERMINAL DEVICE**

VERFAHREN UND ENDGERÄTEVORRICHTUNG FÜR SIDELINK-KOMMUNIKATION

PROCÉDÉ DE COMMUNICATION EN LIAISON LATÉRALE ET DISPOSITIF TERMINAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.10.2021 Bulletin 2021/40**

(73) Proprietor: **GUANGDONG OPPO MOBILE
TELECOMMUNICATIONS
CORP., LTD.
Dongguan, Guangdong 523860 (CN)**

(72) Inventors:
• **ZHAO, Zhenshan**
  **Dongguan, Guangdong 523860 (CN)**
• **LU, Qianxi**
  **Dongguan, Guangdong 523860 (CN)**
• **LIN, Huei-Ming**
  **South Yarra, Victoria 3141 (AU)**

(74) Representative: **Grassi, Stefano
Bugnion S.p.A.
Viale Lancetti, 17
20158 Milano (IT)**

(56) References cited:
**EP-A1- 3 883 142      WO-A1-2018/177141**

CN-A- 108 347 313      CN-A- 108 667 580
KR-A- 20180 107 995    US-A1- 2017 295 559

• **ERICSSON: "On SCI formats", 3GPP DRAFT;
R1-1813649 ERICSSON - ON SCI FORMATS, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE , vol. RAN WG1, no. Chengdu,
China; 20181008 - 20181012 11 November 2018
(2018-11-11), XP051555707, Retrieved from the
Internet:
URL:http://www.3gpp.org/ftp/Meetings%5F3GP
P%5FSYNC/RAN1/Docs/R1%2D1813649%2Ezip
[retrieved on 2018-11-11]**
• **Nokia; Nokia Shanghai Bell: "On Sidelink
Resource Allocation", 3GPP Draft; R1-1813522,
16 November 2018 (2018-11-16), pages 1-6,
XP051479860, Spokane, USA**
• **LG ELECTRONICS: "Considerations on PUCCH
resource allocation for NR", 3GPP DRAFT;
R1-1717963, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE , vol. RAN
WG1, no. Prague, CZ; 20171009 - 20171013 3
October 2017 (2017-10-03), XP051352844,
Retrieved from the Internet:
URL:http://www.3gpp.org/ftp/tsg_ran/WG1_RL
1/TSGR1_90b/Docs/ [retrieved on 2017-10-03]**

## EP 3 890 415 B1

**Description**

Technical Field

Implementations of the present application relate to the field of communications, and in particular to a sidelink communication method and a terminal device.

Background

In order to improve a throughput of a system, a terminal may measure a channel based on some reference signals, and select appropriate a transmission parameter according to a measurement result. For example, the terminal may measure the channel according to a Channel State Information-Reference Signal (CSI-RS), select various types of quality information, and feed the quality information back to a sending terminal, thus improving the throughput of the system.

In a Vehicle to Everything (V2X) system, various sidelink reference signals are also introduced. How to send a sidelink reference signal on a sidelink is a problem to be solved.

Related technologies are known from ERICSSON: "On SCI formats", 3GPP DRAFT; R1-1813649, Vol. RAM WG1, 11 November 2018; KR 20180107995A (INNOVATIVE TECH LAB CO LTD [KR]) 4 October 2018, and WO 2018177141 A1 (HUAWEI TECH CO LTD [CN]) 4 October 2018; & EP 3579658A1 (HUAWEI TECH CO LTD [CN]) 11 December 2019.

Summary

Embodiments of the present application provide a sidelink communication method and a terminal device as defined in the attached independent claims, which may reduce complexity of detecting a sidelink reference signal, and also be beneficial to reducing signaling overhead. Further improvements and embodiments are provided in the dependent claims.

In a first aspect, a sidelink communication method is provided, as defined in claim 1.

In a further aspect, a terminal device is provided, as defined in claim 8.

According to the above technical solutions, a first terminal device determines a transmission resource of a sidelink reference signal to be transmitted based on a transmission resource of a sidelink channel sent by a second terminal device. The first terminal device is enabled to transmit the sidelink reference signal on a determined transmission resource, while the second terminal device can also detect the sidelink reference signal on the determined transmission resource, thus complexity of detecting the sidelink reference signal is reduced and signaling overhead is also reduced by implicitly indicating the transmission resource of the sidelink reference signal through the transmission resource of the sidelink channel.

Brief Description of Drawings

FIG. 1 is a schematic diagram of a sidelink communication system according to an implementation of the present application.

FIG. 2 is a schematic diagram of a sidelink communication system according to an implementation of the present application.

FIG. 3 is a schematic block diagram of a sidelink communication method according to an implementation of the present application.

FIG. 4 is a schematic timing diagram of a sidelink communication method according to an implementation of the present application.

FIG. 5 is another schematic block diagram of a sidelink communication method according to an implementation of the present application.

FIG. 6 is a schematic block diagram of a terminal device according to an implementation of the present application.

FIG. 7 is another schematic block diagram of a terminal device according to an implementation of the present application.

FIG. 8 is another schematic block diagram of a terminal device according to an implementation of the present application.

FIG. 9 is a schematic block diagram of a chip according to an implementation of the present application.

FIG. 10 is a schematic block diagram of a communication system according to an implementation of the present

2

application.

Detailed Description

Technical solutions in implementations of the present application will be described below with reference to the drawings in implementations of the present application. It is apparent that the implementations described are just a part of implementations of the present application, but not all implementations of the present application.

It should be understood that the technical solutions of the implementations of the present application may be applied to various communication systems, such as, a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, a LTE Frequency Division Duplex (FDD) system, a LTE Time Division Duplex (TDD) system, a Universal Mobile Telecommunication System (UMTS) system, a Worldwide Interoperability for Microwave Access (WiMAX) communication system, a New Radio (NR) or future 5G System.

In particular, the technical solutions of the implementations of the present application can be applied to various communication systems based on non-orthogonal multiple access technologies, such as a Sparse Code Multiple Access (SCMA) system, and a Low Density Signature (LDS) system, etc. Of course, the SCMA system and the LDS system may also be referred to as other names in the communication field. Further, the technical solutions of the implementations of the present application can be applied to a multicarrier transmission system employing non-orthogonal multiple access technology, such as an Orthogonal Frequency Division Multiplexing (OFDM) system, a Filter Bank Multi-Carrier (FBMC) system, a Generalized Frequency Division Multiplexing (GFDM) system, and a Filtered OFDM (F-OFDM) system, etc., based on the non-orthogonal multiple access technology.

A terminal device in the implementations of the present application may be referred to a user equipment (UE), an access terminal, a subscriber unit, a subscriber station, a mobile station, a mobile platform, a remote station, a remote terminal, a mobile device, a user terminal, a terminal, a wireless communication device, a user agent, or a user apparatus. An access terminal may be a cellular phone, a cordless phone, a session initiation protocol (SIP) phone, a wireless local loop (WLL) station, a personal digital assistant (PDA), a handheld device or a computing device with a wireless communication function, or other processing device connected to a wireless modem, an on-board device, a wearable device, a terminal device in a future 5G network, or a terminal device in a future evolved Public Land Mobile Network (PLMN), etc., which is not limited in the implementations of the present application.

A network device in the implementations of the present application may be a device for communicating with a terminal device, and the network device may be a Base Transceiver station (BTS) in GSM or CDMA, a NodeB (NB) in a WCDMA system, an evolutional NodeB (eNB or eNodeB) in an LTE system, or a wireless controller in a scenario of a Cloud Radio Access Network (CRAN), or the network device may be a relay station, an access point, an on-board device, a wearable device, a network device in a future 5G network, or a network device in a future evolved Public Land Mobile Network (PLMN), etc., which is not limited in the implementations of the present application.

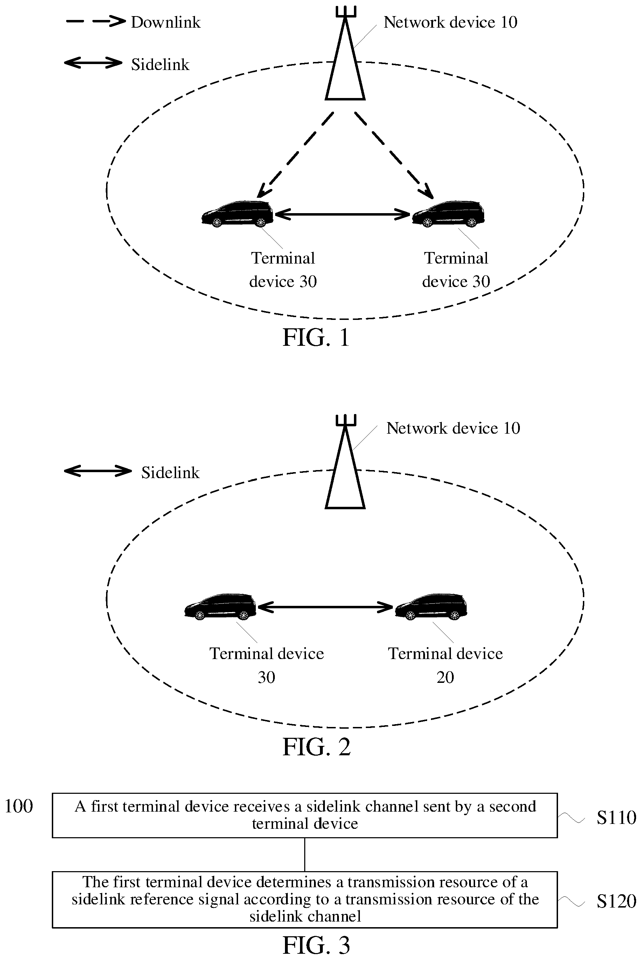

FIG. 1 and FIG. 2 are schematic diagrams of an application scenario according to implementations of the present application. FIG. 1 illustratively shows one network device and two terminal devices. Optionally, the wireless communication system may include multiple network devices, and other quantity of terminal devices may be included within a coverage area of each network device, which is not limited in the implementations of the present application. In addition, the wireless communication system may include other network entities, such as a Mobile Management Entity (MME), a Serving Gateway (S-GW), a Packet Data Network Gateway (P-GW), and the implementations of the present application are not limited thereto.

Specifically, a terminal device 20 and a terminal device 30 may communicate through a Device to Device (D2D) communication mode. During the D2D communication, the terminal device 20 and the terminal device 30 directly communicate through a D2D link, i.e., a sidelink (SL). For example, as shown in FIG. 1 or FIG. 2, the terminal device 20 and the terminal device 30 communicate directly through the sidelink. In FIG. 1, the terminal device 20 and the terminal device 30 communicate through a sidelink, and transmission resources of the terminal devices are allocated by a network device. In FIG. 2, the terminal device 20 and the terminal device 30 communicate through a sidelink, and transmission resources of the terminal devices are independently selected by the terminal devices, no network device is required to allocate the transmission resources.

D2D communication mode may be applied to Vehicle to Vehicle (V2V) communication or Vehicle to Everything (V2X) communication. In the V2X communication, X may generally refer to any device with wireless receiving and sending capabilities, such as, but not limited to, a wireless device that moves slowly, a vehicle-mounted device that moves fast, or a network control node with wireless transmitting and receiving capabilities. It should be understood that the implementations of the present application are mainly applied to V2X communication scenarios, but they may also be applied to any other D2D communication scenarios, and the implementations of the present application are not limited thereto.

LTE-V2X is standardized in Release-14 of 3GPP protocol. Two transmission modes are defined, namely, transmission mode 3 (mode 3) and transmission mode 4 (mode 4). A transmission resource of a terminal device in the transmission mode 3 is allocated by a base station. The terminal device sends data on a sidelink according to the resource allocated by the base station. The base station may allocate, to the terminal device, a resource for a single transmission or resource for a semi-static transmission. A terminal device in the transmission mode 4 transmits data by means of sensing and reservation if the terminal device has a sensing capability. And the terminal device randomly selects a transmission resource from a resource pool if the terminal device does not have the sensing capability. The terminal device having the sensing capability obtains a set of available transmission resources from a resource pool by sensing, and the terminal device randomly selects one resource from the set for data transmission. As services in a vehicle to everything system have a periodicity feature, the terminal device usually adopts a semi-static transmission mode, that is, after selecting one transmission resource, the terminal device will continuously use the resource in multiple transmission periods, thus reducing probabilities of resource re-selection and resource conflicts. The terminal device will carry, in control information for a current transmission, information about a resource reserved for a next transmission, so that other terminal device may determine whether this block of resource is reserved and used by the terminal device through detecting control information of the terminal device, thus achieving a purpose of reducing resource conflicts.

In an NR-V2X system, multiple transmission modes are introduced, for example, mode 1 and mode 2. Mode 1 refers to a network allocating transmission resource for a terminal (similar to mode 3 in LTE-V2X), and mode 2 refers to a terminal selecting transmission resource. Mode 2 includes but is not limited to the following modes:

In Mode 2a: the terminal selects a transmission resource independently (similar to mode 4 in LTE-V2X). For example, the terminal selects a resource independently in a pre-configured or network-configured resource pool (the resource may be selected randomly or by sensing).

In Mode 2b: the terminal assists other terminals in selecting resources. For example, a first terminal sends auxiliary information to a second terminal, the auxiliary information may include but is not limited to available time-frequency resource information, available transmission resource set information, channel measurement information and channel quality information (such as Channel State Information (CSI), a Channel Quality Indicator (CQI), a Precoding Matrix Indicator (PMI), a Rank Indication (RI), Reference Signal Receiving Power (RSRP), reference signal receiving quality (RSRQ), a received signal strength indicator (RSSI), path loss information, etc.)

In Mode 2c: the terminal selects a resource in transmission resources configured for the terminal. For example, the network configures multiple transmission resources for each terminal, and when having sidelink data transmission, the terminal selects a transmission resource from the multiple transmission resources configured by the network to perform data transmission.

In Mode 2d: a first terminal allocates a transmission resource for a second terminal. For example, the first terminal is a group head of group communication, and the second terminal is a group member of the group. The first terminal directly allocates a time-frequency resource for the second terminal for sidelink transmission.

In the NR-V2X, automatic driving needs to be supported, thus higher requirements are made for data interaction between vehicles, such as greater throughput, lower latency, higher reliability, larger coverage range and more flexible resource allocation, etc.

In order to improve throughput of the system, a terminal may measure a channel and select appropriate transmission parameters according to a measurement result. For example, the channel is measured according to a CSI-RS, and information such as CQI, PMI and RI is selected and fed back to a sending terminal, and the sending terminal selects appropriate transmission parameters according to the feedback information, thus improving the throughput of the system.

Various sidelink reference signals are also introduced on the sidelink of NR-V2X. How to send a sidelink reference signal on the sidelink is a problem to be solved.

FIG. 3 is a schematic block diagram of a sidelink communication method 100 according to an implementation of the present application. The method may be performed by a terminal device as a receiving terminal in FIG. 1 or FIG. 2. As shown in FIG. 3, the method 100 includes some or all of the following acts S 110 and S 120.

In S 110, a first terminal device receives a sidelink channel sent by a second terminal device.

In S120, the first terminal device determines a transmission resource of a sidelink reference signal according to a transmission resource of the sidelink channel.

Specifically, the second terminal device may determine the transmission resource of the sidelink channel and send the sidelink channel to the first terminal device on the determined transmission resource. The second terminal device may indicate the transmission resource of sidelink reference signal to the first terminal device through the transmission resource of the sidelink channel. That is, after obtaining the transmission resource of the sidelink channel, the first terminal device may determine the transmission resource of the sidelink reference signal according to the transmission resource of the sidelink channel. Then the first terminal device may transmit the sidelink reference signal on the determined transmission resource. Similarly, the second terminal device may also firstly determine the transmission resource of the sidelink reference signal sent by the first terminal device based on the transmission resource of the sidelink channel, and receive the sidelink reference signal on the determined receiving resource. Herein, the transmission resource may be a time-frequency resource.

It should be noted that for the sidelink channel, the first terminal device is a receiving terminal, and the transmission resource of the sidelink channel is a receiving resource of the sidelink channel, while the second terminal device is a sending terminal, and the transmission resource of the sidelink channel is a sending resource of the sidelink channel. Similarly, for the sidelink reference signal, the first terminal device is a sending terminal, and the transmission resource of the sidelink reference signal is a sending resource of the sidelink reference signal, while the second terminal device is a receiving terminal, and the transmission resource of the sidelink reference signal is a receiving resource of the sidelink reference signal.

In an implementation, the sidelink channel in the implementation of the present application includes a Physical Sidelink Share Channel (PSSCH).

Optionally, the sidelink channel in the implementation of the present application may include at least one of the following channels: a Physical Sidelink Control Channel (PSCCH), a Physical Sidelink Broadcast Channel (PSBCH) and a Physical Sidelink Feedback Channel (PSFCH), etc.

Optionally, the sidelink reference signal in the implementation of the present application may be any one of the following signals: a sidelink CSI-RS, a sidelink Sounding Reference Signal (SRS), a sidelink Phase Tracking Reference Signal (PT-RS), and a sidelink Demodulation Reference Signal (DMRS).

It should be understood that although the following document is described mostly by taking the sidelink channel be a PSCCH and/or a PSSCH and the sidelink reference signal be a CSI-RS as an example, the following various implementations are applicable to the sidelink channels and sidelink reference signals listed above.

In an implementation, the first terminal device determines a time domain resource of a sidelink reference signal according to a time domain resource of a sidelink channel. The time domain resource may include a slot in which the sidelink reference signal is located and/or a symbol position occupied by the sidelink reference signal in a slot. Or, the time domain unit may include a subframe in which the sidelink reference signal is located and/or a symbol position occupied by the sidelink reference signal in a subframe.

Optionally, the first terminal device may determine a slot in which a sidelink reference signal is located according to a slot in which a sidelink channel is located. For example, the first terminal device determines that a slot in which the sidelink reference signal is located is a slot (N+k) according to a slot N in which the sidelink channel is located, herein the parameter k is an integer and may be determined according to pre-configuration information of a protocol (for example, pre-defined by a protocol), configuration information of a network device (for example, configured by the network device with a broadcast channel, Radio Resource Control (RRC) signaling or control information, etc.) or configuration information of other terminal device. For example, if the first terminal device receives a PSCCH and/or a PSSCH in a slot N, the first terminal device may determine that a transmission resource of a sidelink CSI-RS is in a slot (N+k). If the parameter k is configured by other terminal device, the other terminal device may be a second terminal device, that is, a terminal device that sends the PSCCH and/or the PSSCH to the first terminal device. The other terminal device may be a third terminal device. For example, the first terminal device, the second terminal device and the third terminal device form a communication group, and the third terminal device is a group head and has functions of resource management, allocation, control, etc. The first terminal device and the second terminal device are group members, and the third terminal device may configure transmission parameters of sidelink communication in the group. It should be understood that when the parameter k is configured by the second terminal device, the second terminal device may also be a group head of a communication group in which the first terminal device and the second terminal device are. When the parameter k is configured by other terminal device, the other terminal device may configure the parameter through the sidelink. For example, other terminal device may configure the parameter k to the first terminal device through channels such as a PSCCH, a PSSCH, a PSBCH, a PSFCH, or through sidelink RRC signaling.

Optionally, the first terminal device may determine a time domain symbol occupied by a sidelink reference signal in a slot according to one of time domain symbols occupied by a sidelink channel in a slot. For example, the first terminal device determines that a time domain symbol occupied by the sidelink reference signal is (M+i) in a slot according to an initial time domain symbol M occupied by the sidelink channel in the slot, the parameter i is an integer. A slot usually may include 14 time domain symbols, so (M+i) may not be greater than 14. Similarly, the parameter i may be determined by pre-configuration information of a protocol, configuration information of a network device or configuration information of other terminal device. For example, the first terminal device initially receives a PSCCH and/or a PSSCH on a time domain symbol M in a slot, the first terminal device may send a sidelink CSI-RS on a time domain symbol (M+i) of a slot. At this time, the PSCCH and/or the PSSCH may or may not be in one slot with the sidelink CSI-RS. For example, the first terminal device receives the PSCCH and/or the PSSCH on the symbol M in a slot N, the first terminal device may send the sidelink CSI-RS on the symbol (M+i) in the slot N, or the first terminal device may send the sidelink CSI-RS on the symbol (M+i) in the slot (N+k).

After determining the slot in which the sidelink reference signal is located according to the slot in which the sidelink channel is located, the first terminal device may further determine a symbol position occupied by the sidelink reference signal in a slot according to pre-configuration information of a protocol, configuration information of a network device or configuration information of other terminal device. For example, the network device and the terminal device may make an agreement in advance to transmit the sidelink CSI-RS on a last symbol or a last second symbol in a slot. After determining the slot in which the sidelink CSI-RS is located, the first terminal device may determine to transmit the sidelink CSI-RS in the last symbol or the last second symbol of a corresponding slot.

Or, after determining the symbol position occupied by tthe sidelink reference signal in a slot according to the symbol position occupied by tthe sidelink channel in a slot, the first terminal device may further determine a slot in which the sidelink reference signal is located according to pre-configuration information of a protocol, configuration information of a network device or configuration information of other terminal device. For example, the network device may configure the first terminal device to send the sidelink CSI-RS in a next slot of a slot in which the PSCCH and/or the PSSCH are located through RRC signaling. After determining the symbol position occupied by the sidelink CSI-RS in a slot, the first terminal device may send the sidelink CSI-RS at a determined symbol position in a next slot of the slot in which the PSCCH and/or PSSCH are located.

Or, the first terminal device may determine a slot in which a sidelink reference signal is located according to a slot in which a sidelink channel is located, and determine a symbol position occupied by the sidelink reference signal in a slot according to a symbol position occupied by the sidelink channel in a slot, respectively, so that the first terminal device may determine a time-frequency resource of the sidelink reference signal.

In an implementation, the first terminal device determines a frequency domain resource of a sidelink reference signal according to a frequency domain resource of a sidelink channel. The frequency domain resource may include at least one type of the following information: a frequency domain starting position of the sidelink reference signal, a frequency domain resource length of the sidelink reference signal, and a frequency domain ending position of the sidelink reference signal.

Optionally, the first terminal device may determine a frequency domain starting position of a sidelink reference signal according to a frequency domain starting position of a sidelink channel. For example, the first terminal device determines that a frequency domain starting position of the sidelink reference signal is at a resource block (L+j) according to a resource block L in which the frequency domain starting position of the sidelink channel is located, the parameter j is an integer and may be determined by pre-configuration information of a protocol, configuration information of a network device or configuration information of other terminal device. For example, the first terminal device receives a PSCCH and/or a PSSCH on a frequency domain resource whose frequency domain starting position is a Resource Block (RB) L, and the first terminal device may transmit a sidelink CSI-RS on a frequency domain resource whose frequency domain starting position is (L+j). When j is 0, the frequency domain starting position of the CSI-RS is the same as the frequency domain starting position of the PSCCH and/or the PSSCH. The frequency domain starting position may be represented by a RB index value or a subband index value. Similarly, the first terminal device may determine a frequency domain ending position of a sidelink CSI-RS according to a frequency domain ending position of a PSCCH and/or a PSSCH. For example, the frequency domain ending position of the sidelink CSI-RS is the same as or an offset from the frequency domain ending position of the PSCCH and/or the PSSCH. Optionally, the frequency domain starting position and/or frequency domain ending position of the sidelink CSI-RS may be the same as or an offset from a specific RB in a frequency domain resource occupied by the received PSCCH and/or PSSCH. The offset may be predefined by a protocol, configured by a network or configured by other terminal.

Optionally, the first terminal device may determine a frequency domain resource length of a sidelink reference signal according to a frequency domain resource length of a sidelink channel. For example, the first terminal device may determine the frequency domain resource length of the sidelink channel as the frequency domain resource length of the sidelink reference signal. For example, the first terminal device may determine the frequency domain resource length of the CSI-RS according to the frequency domain resource length of the PSCCH and/or the PSSCH. If a frequency domain resource length of a received PSCCH and/or PSSCH is Q Physical Resource Blocks (PRBs), the first terminal device may determine that a frequency domain resource length of a CSI-RS is also Q PRBs (i.e., the same as the frequency domain resource length of the PSCCH and/or the PSSCH), or (Q/a) PRBs, or has other operational relationship with Q. Parameter a is a positive integer and may be determined according to pre-configuration information of a protocol, configuration information of a network device or configuration information of other terminal device.

After determining the frequency domain starting position and/or the frequency domain ending position of the sidelink reference signal according to the frequency domain resource of the sidelink channel, the first terminal device may further determine a frequency domain resource length of the sidelink reference signal according to pre-configuration information of a protocol, configuration information of a network device or configuration information of other terminal device. For example, the first terminal device may determine a frequency domain starting position of the PSCCH as a frequency domain starting position of the sidelink CSI-RS, and a frequency domain resource of the sidelink CSI-RS may be determined in combination with the frequency domain length of the sidelink CSI-RS being 16 PRBs pre-configured by the protocol.

Or, after determining the frequency domain starting position and/or the frequency domain ending position of the sidelink reference signal according to the frequency domain resource of the sidelink channel, the first terminal device may further determine a frequency domain resource length of the sidelink reference signal according to a frequency domain resource length of the sidelink channel. For example, the first terminal device may determine a frequency domain starting position of a PSSCH as a frequency domain starting position of a sidelink CSI-RS, and determine a frequency domain resource length of the PSSCH as a frequency domain resource length of the sidelink CSI-RS, thereby determining a frequency domain resource of the sidelink CSI-RS.

After receiving multiple types of sidelink channels, the first terminal device may determine a frequency domain transmission resource of a sidelink reference signal according to transmission resources of the multiple types of sidelink channels. For example, a frequency domain starting position may be determined according to a part of the multiple types of channels, and a frequency domain resource length may be determined according to another part of the multiple types of channels. Specifically, when the first terminal device receives both a PSCCH and a PSSCH, the first terminal device may determine a frequency domain starting position of a sidelink CSI-RS according to a frequency domain starting position of the PSCCH, and determine a frequency domain resource length of the sidelink CSI-RS according to a frequency domain resource length of the PSSCH.

After receiving multiple types of sidelink channels, the first terminal device may determine a transmission resource of a sidelink reference signal according to transmission resources of the multiple types of sidelink channels. For example, a time-domain resource may be determined according to a part of the multiple types of channels and a frequency-domain resource may be determined according to another part of the multiple types of channels. For another example, a slot in which the sidelink reference signal is located may be determined according to one type of channel, and a frequency domain starting position may be determined according to another type of channel. For example, when receiving both a PSCCH and a PSSCH, the first terminal device may determine a slot of a sidelink CSI-RS according to a slot in which the PSCCH is located, and determine a frequency domain starting position of the sidelink CSI-RS according to a frequency domain starting position of the PSSCH. For another example, when receiving both a PSCCH and a PSSCH, the first terminal device may determine a slot of a sidelink CSI-RS according to a slot in which the PSCCH is located, and determine a frequency domain starting position and a frequency domain resource length of the sidelink CSI-RS according to a frequency domain starting position and a frequency domain resource length of the PSSCH.

After receiving multiple types of sidelink channels, the first terminal device may determine a transmission resource of a sidelink reference signal according to transmission resources of the multiple types of sidelink channels, pre-configuration information of a protocol or network configuration information. For example, when the first terminal device receives both a PSCCH and a PSSCH, the first terminal device receives the PSCCH in a slot P, determines a slot of a sidelink CSI-RS as a slot P+1 according to the pre-configuration information, determines the sidelink CSI-RS is in a last symbol of a slot according to the pre-configuration information, determines a frequency-domain starting position of the sidelink CSI-RS according to a frequency-domain starting position of the PSSCH, and determines a frequency-domain resource length of the sidelink CSI-RS to be 16 RBs according to the pre-configuration information.

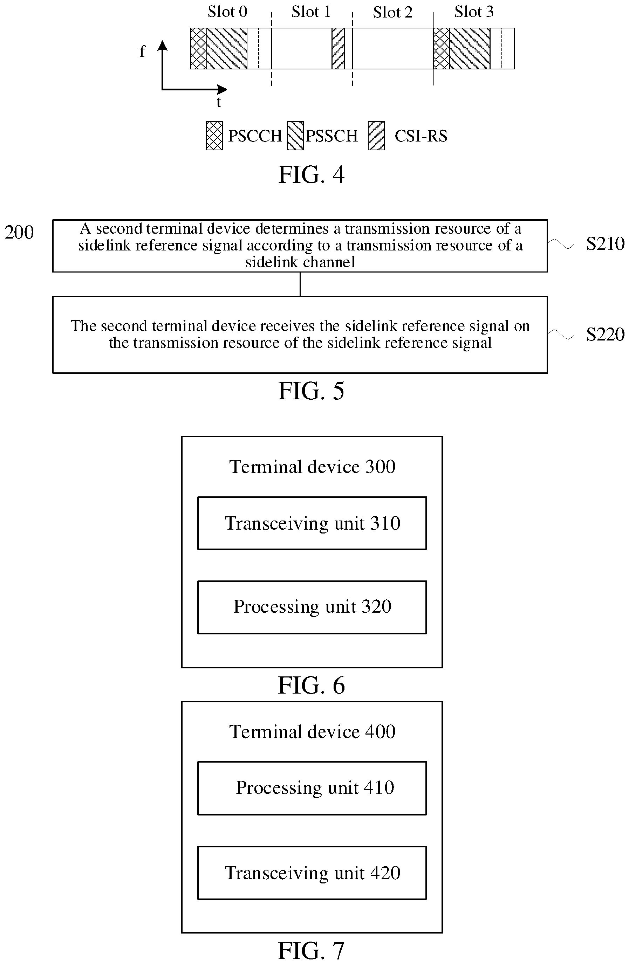

Below, a flow of a sidelink communication according to an implementation of the present application is described with reference to FIG. 4.

At first, a first terminal device performs sidelink communication with a second terminal device, and the second terminal device sends sidelink data to the first terminal device, including sidelink control information (SCI) and sidelink data, herein the SCI is used for carrying control information required for demodulating the data, such as a transmission resource, a Modulation and Coding Scheme (MCS) and other information of the data. The SCI is carried in a PSCCH, and the data is carried in a PSSCH. A transmission resource for the second terminal device to transmit the SCI or the data may be allocated according to a network as described above, or may be selected by a terminal independently. The first terminal device sends a sidelink CSI-RS to the second terminal device. Here, it is assumed that the sidelink CSI-RS occupies one time domain symbol in a time domain.

FIG. 4 is a schematic timing diagram of a sidelink communication method according to an implementation of the present application. Specifically, the schematic timing is as follows:

Step 1: a second terminal device sends sidelink data including a PSCCH and a PSSCH to a first terminal device in slot 0.

Step 2: the first terminal device sends a sidelink CSI-RS to the second terminal device in slot 1.

Step 3: the second terminal device receives the sidelink CSI-RS sent by the first terminal device, and performs channel measurement and other processing according to the sidelink CSI-RS.

Step 4: the second terminal device sends sidelink data in slot 3, and selects corresponding transmission parameters, such as a MCS level, a PMI, transmission power, etc., according to a measurement result acquired based on the sidelink CSI-RS.

Optionally, in an implementation of the present application, a transmission resource of the sidelink reference signal may also be determined according to the SCI carried in the PSCCH. That is, the second terminal device may indicate the transmission resource of the sidelink reference signal to the first terminal device through the SCI.

Herein, the SCI may be used for carrying control information of a PSSCH scheduled by the SCI, such as indication information of a time-frequency resource, priority information, a MCS level, etc. At the same time, the SCI may carry resource indication information of the sidelink reference signal, which is used for the first terminal device to determine a time-frequency resource for sending the sidelink reference signal according to the indication of the SCI. Specifically, the SCI may indicate a time domain resource and/or a frequency domain resource of the sidelink reference signal.

Optionally, the resource indication information of the sidelink CSI-RS may include indication information of a time domain resource of the sidelink CSI-RS, specifically including indication information of a slot of the sidelink CSI-RS and/or indication information of a time domain symbol of the sidelink CSI-RS.

For example, the resource indication information of the sidelink CSI-RS may only include indication information of the time domain symbol, so after obtaining indication information of the time domain symbol of the sidelink CSI-RS according to the SCI, the first terminal device may determine a time domain symbol occupied by the sidelink CSI-RS in a slot. For example, the indication information of the time domain symbol indicates that the sidelink CSI-RS occupies a last symbol in a slot. Specifically, the indication information of the time domain symbol may include 4 bits (which may be used for indicating 16 time domain symbols) for indicating time domain symbols occupied in one slot. Or, a protocol may predefine that the sidelink CSI-RS may only be sent in a last time domain symbol or a last second time domain symbol in a slot, so the indication information of the time domain symbol may include 1 bit, that is, whether the sidelink CSI-RS is sent in the last time domain symbol or the last second time domain symbol is indicated by a value of 1 bit. At this time, a slot in which the sidelink CSI-RS is located may be determined by pre-configuration information of a protocol, configuration information of a network device, configuration information of a terminal device or a transmission resource of a sidelink channel. For example, the network device may configure that the slot in which the sidelink CSI-RS is located may be determined by a slot in which the PSCCH carrying the SCI is located. Specifically, the slot in which the sidelink CSI-RS is located may be a next slot of the slot in which the PSCCH carrying the SCI is located, or may be in the same slot as the PSCCH carrying the SCI, or may be in the same slot as the PSSCH scheduled by the SCI.

For another example, the resource indication information of the sidelink CSI-RS may only include indication information of a slot, so after obtaining the indication information of a slot of the sidelink CSI-RS from the SCI, the first terminal device may determine the slot in which the sidelink CSI-RS is located. At this time, a time domain symbols occupied by the sidelink CSI-RS in a slot may be determined by pre-configuration information of a protocol, configuration information of a network device, configuration information of a terminal device or a transmission resource of a sidelink channel. For example, the network device may configure a last or a last second symbol of the sidelink CSI-RS in a slot. The indication information of the slot may be represented by a slot index, the slot index may be used for determining a slot. Or the indication information of the slot may be represented by indication information of a slot offset, the indication information of the slot offset may be used for indicating a slot offset value of the slot in which the sidelink CSI-RS is located relative to a time domain position (such as a slot in which the PSCCH carrying the SCI is located, or a position of slot 0 in a wireless frame). For example, if the offset value indicated by the indication information of the slot offset relative to the slot in which the PSCCH carrying the SCI is located is 2, then the first terminal device may send the sidelink CSI-RS in a slot (N+2) after receiving the SCI in a slot N.

For another example, the resource indication information of the sidelink CSI-RS may include both indication information of a slot and indication information of a time domain symbol. The first terminal device may determine a slot in which the sidelink CSI-RS is located according to the indication information of the slot, and determine a symbol occupied by the sidelink CSI-RS in the slot indicated by the indication information of the slot according to the indication information of the slot, thereby determining a time domain resource of the sidelink CSI-RS.

Optionally, the resource indication information of the sidelink CSI-RS may include indication information of a frequency domain resource of the sidelink CSI-RS, specifically including at least one type of the following information: indication information of a frequency domain starting position of the sidelink CSI-RS, indication information of a frequency domain ending position of the sidelink CSI-RS, and information of a frequency domain length of the sidelink CSI-RS.

For example, the resource indication information of the sidelink CSI-RS may only include indication information of a frequency domain starting position and/or indication information of a frequency domain ending position. At this time, a frequency domain resource length of the sidelink CSI-RS may be determined by pre-configuration information of a protocol, configuration information of a network device, configuration information of a terminal device or a transmission resource of a sidelink channel. For example, the network device may configure the sidelink CSI-RS to occupy two PRBs in the frequency domain. The first terminal device may determine a frequency domain resource of the sidelink CSI-RS according to a frequency domain starting position indicated by the indication information of the frequency domain starting position, or a frequency domain ending position indicated by the indication information of the frequency domain ending position, and a frequency domain resource length occupied by the sidelink CSI-RS configured by the network device.

For another example, the first terminal device may determine a frequency domain starting position or a frequency domain ending position of the sidelink CSI-RS according to the indication information of the frequency domain starting position or the indication information of the frequency domain ending position, and determine a frequency domain resource length of the sidelink CSI-RS according to a frequency domain resource length of the PSSCH scheduled by SCI.

Specifically, the indication information of the frequency domain starting position or the indication information of the frequency domain ending position may be a directly indicated RB of a frequency domain position or an index value of a subband, etc. Or the indication information of the frequency domain starting position or the indication information of the frequency domain ending position may be an offset value relative to a frequency domain position, the frequency domain position may be a frequency domain position corresponding to a lowest resource block/a highest resource block or a subband of the PSCCH carrying the SCI, or a bandwidth start/ending position of a carrier, or a start/ending position of a bandwidth part, or a frequency domain position corresponding to an index of a lowest resource block/a highest resource block or a subband of a synchronization signal. For example, the indication information of the frequency domain starting position indicates an offset value of the frequency domain starting position of the sidelink CSI-RS relative to the frequency domain starting position of the PSCCH carrying the SCI. Or the indication information of the frequency domain starting position indicates an offset value of the frequency domain starting position of the sidelink CSI-RS relative to the frequency domain resource starting position of the PSSCH scheduled by the SCI.

For another example, the resource indication information of the sidelink CSI-RS may only include frequency domain length information, and the frequency domain length information may include information on a number of RBs or subbands occupied by the sidelink CSI-RS. At this time, a frequency domain starting position or a frequency domain ending position of the sidelink CSI-RS may be determined by pre-configuration information of a protocol, configuration information of a network device, configuration information of a terminal device or a transmission resource of a sidelink channel. For example, the frequency domain starting position of the sidelink CSI-RS may be configured as an offset of a frequency domain position, the frequency domain position may be a predetermined resource. Or the frequency domain starting position of the sidelink CSI-RS may be the same as the frequency domain starting position of the PSCCH carrying the SCI.

For another example, the resource indication information of the sidelink CSI-RS may include indication information of a frequency domain starting position and indication information of a frequency domain ending position. Or the resource indication information of the sidelink CSI-RS may include any one type of indication information of a frequency domain starting position and indication information of a frequency domain ending position, and frequency domain length information.

It should be noted that, in the implementations of the present application, a slot may be replaced by a subframe, that is, indication information of a slot may be replaced by indication information of a subframe. Or, that the first terminal device determines a slot in which the sidelink reference signal is located according to a slot in which the sidelink channel is located may be replaced by that the first terminal device determines a subframe in whcih the sidelink reference signal is located according to a subframe in which the sidelink channel is located.

Optionally, the second terminal device may also indicate a transmission resource of a sidelink reference signal to the first terminal device through a combination of SCI and a transmission resource of a sidelink channel. For example, the second terminal device may indicate a time domain resource of the sidelink reference signal to the first terminal device through the SCI, and indicate a frequency domain resource of the sidelink reference signal to the first terminal device through the transmission resource of the sidelink channel. Or, the second terminal device may indicate a slot in which the sidelink reference signal is located to the first terminal device through the SCI, and indicate a time domain symbol occupied by the sidelink reference signal in a slot to the first terminal device through the transmission resource of the sidelink channel. It should be understood that various possible joint indication modes are within the protection scope of the implementations of the present application.

Optionally, after obtaining the transmission resource of the sidelink reference signal, the first terminal device may also obtain a transmission period of the sidelink reference signal, the transmission period may be predefined by protocol, configured by a network device, configured by a terminal device or indicated by the SCI. After obtaining the transmission resource and transmission period of the sidelink reference signal, the first terminal device may periodically send the sidelink reference signal on a determined fixed resource. For example, a transmission period of the sidelink CSI-RS is 2ms, if the first terminal device transmits the sidelink CSI-RS for a first time in a next slot (N+1) of a slot N in which the PSCCH is received, the first terminal device will transmit the sidelink CSI-RS for a second time in a slot which is 2 ms after the slot (N+1), and so on.

In an implementation, the second terminal device indicates the first terminal device whether to send the sidelink reference signal through carrying indication information in the SCI.

A sidelink reference signal does not need to be transmitted at all times, and the first terminal device may send the sidelink reference signal according to indication information of the second terminal device. Specifically, the second terminal device indicates the first terminal device to send the sidelink reference signal through carrying indication information in the SCI. Further combined with the above method for determining the transmission resource of the sidelink reference signal, the first terminal device may send the sidelink reference signal on a determined time-frequency resource. Similarly, the second terminal device may receive the sidelink reference signal on the time-frequency resource, so as to perform channel measurement.

In an implementation, the second terminal device explicitly indicates the first terminal device whether to send a sidelink reference signal through including an indication field in the SCI. The indication field is 1 bit, in which value 1 represents to send, and value 0 represents not to send.

Optionally, the second terminal device may also implicitly indicate the first terminal device whether to send a sidelink reference signal through the SCI. For example, whether to send the sidelink reference signal may be implicitly indicated by a scrambling sequence of the SCI or a format of the SCI. For example, when the SCI is scrambled with a first scrambling sequence, the SCI indicates to send, when the SCI is scrambled with a second scrambling sequence, the SCI indicates not to send. For another example, when a first SCI format is adopted, the SCI indicates to send, and when a second SCI format is adopted, the SCI indicates not to send.

For example, the indication information is implicitly carried by scrambling a bit sequence of a coded SCI. For example, the bit sequence of the coded SCI is: b (0), ..., b ($M_{bit}$ -1), wherein $M_{bit}$ indicates a bit length of the coded SCI. The sequence is scrambled as follows: $b(i) = (b(i) + c(i))$ mod 2, where $c(i)$ represents a scrambled sequence. Different scrambling sequences are used for representing different indication information. By using different scrambling sequences to descramble, the first terminal device may determine the indication information.

For another example, information bits of the SCI are used to calculate a Cyclic Redundancy Check (CRC) sequence, and the CRC sequence is appended to the information bits of the SCI. Part bits of the CRC sequence is scrambled, and different indication information is carried by using different scrambling sequences. For example, an information bit sequence of the SCI is $a_0,a_1,......,a_{A-1}$, a CRC sequence generated based on the information bit sequence is $p_0,p_1,......,p_{L-1}$, and the CRC sequence is appended to the information bit sequence to generate a new sequence, which is $b_0,b_1,......,b_{k-1}$. A specific operation is:

$$b_k = a_k, k = 0,1,......,A-1$$

$$b_k = p_{k-A}, k = A, A+1,......,A+L-1$$

Where $K = A+L$. A represents an information bit length of the SCI, and L represents a check bit length of the CRC.

Part of CRC is scrambled with an RNTI value of 16-bit to generate a sequence $c_0,c_1,......,c_{k-1}$ :

$$c_k = b_k, k = 0,1,......,A+7$$

$$c_k = (b_k + x_{rnti,k-A-8}) \bmod 2, k = A+8, A+9, A+10,......,A+23$$

In this process, different scrambling sequences (i.e., different RNTIs) may be used to scramble the sequence, and different scrambling sequences correspond to different indication information.

Optionally, when scrambling sequences of the SCI or formats of the SCI are used to implicitly indicate whether to send a sidelink reference signal, a protocol may predefine or a network device may preconfigure a mapping relationship between the scrambling sequences of the SCI and the indication information or a mapping relationship between the formats of the SCI and the indication information.

FIG. 5 is a schematic block diagram of a sidelink communication method 200 according to an implementation of the present application. The method may be performed by a terminal device as a sending terminal in FIG. 1 or FIG. 2. As shown in FIG. 5, the method 200 includes some or all of the following contents of acts S210 and S220. This is not part of the claimed invention.

In S210, a second terminal device determines a transmission resource of a sidelink reference signal according to transmission resource of a sidelink channel.

In S220, the second terminal device receives the sidelink reference signal on the transmission resource of the sidelink reference signal.

Optionally, in an implementation of the present application, that the second terminal device determines the transmission resource of the sidelink reference signal according to the transmission resource of the sidelink channel includes that the second terminal device determines a time domain resource of the sidelink reference signal according to a time domain resource of the sidelink channel; and/or the second terminal device determines a frequency domain resource of the sidelink reference signal according to the frequency domain resource of the sidelink channel.

Optionally, in an implementation of the present application, that the second terminal device determines the time domain resource of the sidelink reference signal according to the time domain resource of the sidelink channel includes that the second terminal device determines a slot in which the sidelink reference signal is located according to a slot in which the sidelink channel is located.

Optionally, in an implementation of the present application, that the second terminal device determines the frequency domain resource of the sidelink reference signal according to the frequency domain resource of the sidelink channel includes that the second terminal device determines a frequency domain starting position of the sidelink reference signal according to a frequency domain starting position of the sidelink channel; and/or the second terminal device determines a frequency domain resource length of the sidelink reference signal according to a frequency domain resource length of the sidelink channel.

Optionally, in an implementation of the present application, the method further includes: the second terminal device determines at least one type of the following information: a time domain symbol occupied by the sidelink reference signal in the slot, a frequency domain starting position of the sidelink reference signal, and a frequency domain resource length of the sidelink reference signal according to pre-configuration information of a protocol, configuration information of a network device or configuration information of a terminal device other than the first terminal device.

In an implementation of the present application, the method further includes: the second terminal device sends sidelink control information (SCI) to the first terminal device, and the SCI is used for indicating the first terminal device to send the sidelink reference signal.

In an implementation of the present application, the SCI includes an indication field, and the indication field is used for indicating the first terminal device to send the sidelink reference signal.

Optionally, in an implementation of the present application, a scrambling sequence used by the SCI is used for indicating the first terminal device to send the sidelink reference signal.

In an implementation of the present application, the sidelink channel includes a physical sidelink shared channel (PSSCH).

Optionally, the sidelink channel may include one of the following channels: a physical sidelink control channel (PSCCH), and a physical sidelink feedback channel (PSFCH).

Optionally, in an implementation, the sidelink reference signal includes a sidelink CSI-RS, a sidelink SRS, a sidelink PT-RS or a sidelink DMRS.

It should be understood that an interaction between the second terminal device and the first terminal device, related features and functions etc. described by the second terminal device correspond to related features and functions of the first terminal device. That is to say, if the first terminal device sends a message to the second terminal device, the second terminal device will receive a corresponding message from the first terminal device.

It should be understood that sequence numbers of the foregoing processes do not mean execution orders in various implementations of the present application. The execution orders of the processes should be determined according to functions and internal logic of the processes, which should not be construed as any limitation on implementations of the implementations of the present application.

The sidelink communication methods according to the implementations of the present application have been described in detail above. A sidelink communication device according to an implementation of the present application will be described below with reference to FIGS. 6 to FIGS. 8. Technical features described in the method implementations are applicable to following device implementations.

FIG. 6 shows a schematic block diagram of a terminal device 300 according to an implementation of the present application. The terminal device 300 is a first terminal device. As shown in FIG. 6, the terminal device 300 includes a transceiving unit 310 and a processing unit 320.

The transceiving unit 310 is configured to receive a sidelink channel sent by a second terminal device; and the processing unit 320 is configured to determine a transmission resource of a sidelink reference signal according to a transmission resource of the sidelink channel.

In an implementation of the present application, the processing unit 320 is specifically configured to determine a time domain resource of the sidelink reference signal according to a time domain resource of the sidelink channel; and/or determine a frequency domain resource of the sidelink reference signal according to a frequency domain resource of the sidelink channel.

Optionally, in an implementation of the present application, the processing unit 320 is specifically configured to determine a slot in which the sidelink reference signal is located according to a slot in which the sidelink channel is located.

Optionally, in an implementation of the present application, the processing unit 320 is specifically configured to determine a frequency domain starting position of the sidelink reference signal according to a frequency domain starting position of the sidelink channel; and/or determine a frequency domain resource length of the sidelink reference signal according to a frequency domain resource length of the sidelink channel.

Optionally, in an implementation of the present application, the processing unit 320 is further configured to

11

determine at least one type of the following information: a time domain symbol occupied by the sidelink reference signal in the slot, the frequency domain starting position of the sidelink reference signal, and the frequency domain resource length of the sidelink reference signal according to pre-configuration information of a protocol, configuration information of a network device or configuration information of a terminal device other than the first terminal device.

Optionally, in an implementation of the present application, the processing unit 320 is further configured to obtain sidelink control information (SCI) sent by the second terminal device. The processing unit 320 is specifically configured to determine the transmission resource of the sidelink reference signal according to the SCI and the transmission resource of the sidelink channel.

Optionally, in an implementation of the present application, the SCI is used for indicating the time domain resource of the sidelink reference signal and/or the frequency domain resource of the sidelink reference signal.

In an implementation of the present application, the processing unit 320 is specifically configured to determine the transmission resource of the sidelink reference signal according to the transmission resource of the sidelink channel when the SCI indicates to send the sidelink reference signal.

In an implementation of the present application, the SCI includes an indication field, and the processing unit 320 is specifically configured to determine to send the sidelink reference signal according to the indication field.

Optionally, in an implementation of the present application, the processing unit 320 is specifically configured to determine to send the sidelink reference signal according to a scrambling sequence used by the SCI.

Optionally, in an implementation of the present application, the processing unit 320 is further configured to obtain a transmission period of the sidelink reference signal from at least one type of the following information: pre-configuration information of a protocol, configuration information of a network device, and sidelink control information (SCI).

Optionally, in an implementation of the present application, the sidelink channel includes at least one of the following channels: a physical sidelink control channel (PSCCH), a physical sidelink shared channel (PSSCH), and a physical sidelink feedback channel (PSFCH).

Optionally, in an implementation of the present application, the sidelink reference signal includes a sidelink CSI-RS, a sidelink SRS, a sidelink PT-RS or a sidelink DMRS.

It should be understood that the terminal device 300 according to the implementation of the present application may correspond to the first terminal device in the method implementation of the present application, and the above-mentioned and other operations and/or functions of various units in the terminal device 300 are respectively for implementing corresponding processes of the first terminal device in the method shown in FIG. 3, which will not be repeated here for brevity.

FIG. 7 shows a schematic block diagram of a terminal device 400 according to an implementation of the present application. The terminal device 400 is a second terminal device. As shown in FIG. 7, the terminal device 400 includes a processing unit 410 and a transceiver 420. This is not part of the claimed invention.

The processing unit 410 is configured to determine a transmission resource of a sidelink reference signal according to a transmission resource of a sidelink channel; and
the transceiver unit 420 is configured to receive the sidelink reference signal on the transmission resource of the sidelink reference signal.

Optionally, in an implementation of the present application, the processing unit 410 is specifically configured to determine a time domain resource of the sidelink reference signal according to a time domain resource of the sidelink channel; and/or determine a frequency domain resource of the sidelink reference signal according to a frequency domain resource of the sidelink channel.

Optionally, in an implementation of the present application, the processing unit 410 is specifically configured to determine a slot in which the sidelink reference signal is located according to a slot in which the sidelink channel is located.

Optionally, in an implementation of the present application, the processing unit 410 is specifically configured to determine a frequency domain starting position of the sidelink reference signal according to a frequency domain starting position of the sidelink channel; and/or determine a frequency domain resource length of the sidelink reference signal according to a frequency domain resource length of the sidelink channel.

Optionally, in an implementation of the present application, the processing unit 410 is further configured to determine at least one type of the following information: a time domain symbol occupied by the sidelink reference signal in the slot, the frequency domain starting position of the sidelink reference signal, and the frequency domain resource length of the sidelink reference signal according to pre-configuration information of a protocol, configuration information of a network device or configuration information of a terminal device other than the first terminal device.

Optionally, in an implementation of the present application, the transceiver unit 420 is further configured to send sidelink control information (SCI) to the first terminal device, and the SCI is used for indicating the first terminal device to send the sidelink reference signal.

Optionally, in an implementation of the present application, the SCI includes an indication field, and the indication field is used for indicating the first terminal device to send the sidelink reference signal.

Optionally, in an implementation of the present application, a scrambling sequence used by the SCI is used for indicating the first terminal device to send the sidelink reference signal.

Optionally, in an implementation of the present application, the sidelink channel includes at least one of the following channels: a physical sidelink control channel (PSCCH), a physical sidelink shared channel (PSSCH), and a physical sidelink feedback channel (PSFCH).

Optionally, in an implementation of the present application, the sidelink reference signal includes a sidelink CSI-RS, a sidelink SRS, a sidelink PT-RS or a sidelink DMRS.

It should be understood that the terminal device 400 according to the implementation of the present application may correspond to the second terminal device in the method implementation of the present application, and the above-mentioned and other operations and/or functions of various units in the terminal device 400 are respectively for implementing corresponding processes of the second terminal device in the method shown in FIG. 5, which will not be repeated here for brevity.

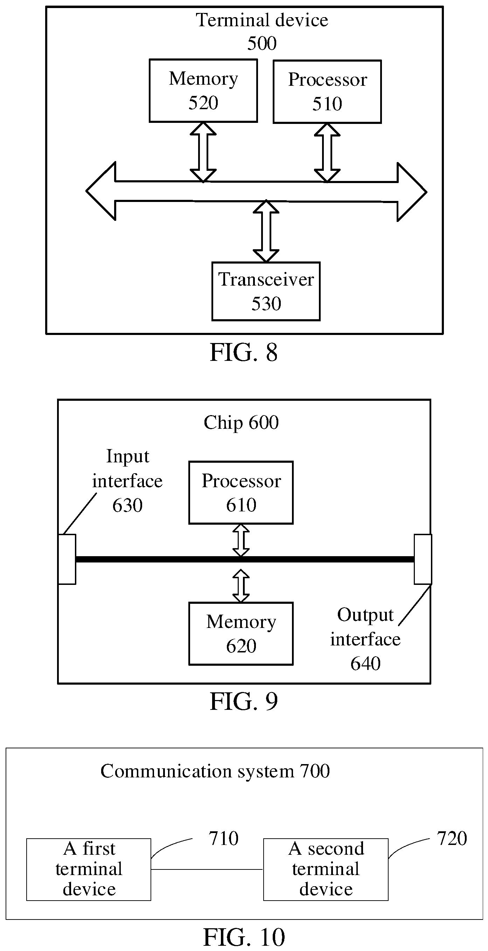

As shown in FIG. 8, an implementation of the present application further provides a terminal device 500, which may be the terminal device 300 in FIG. 6 and can be used for executing contents of the first terminal device corresponding to the method 100 in FIG. 3. The terminal device 500 may be the terminal device 400 in FIG. 7 and can be used for executing contents of the second terminal device corresponding to the method 200 in FIG. 5. The terminal device 500 shown in FIG. 8 includes a processor 510. The processor 510 may call and run a computer program from a memory to implement the method in implementations of the present application.

Optionally, as shown in FIG. 8, the terminal device 500 may further include a memory 520. Herein, the processor 510 may call and run a computer program from the memory 520 to implement the method in the implementations of the present application.

Herein, the memory 520 may be a separate device independent of the processor 510 or may be integrated in the processor 510.

Optionally, as shown in FIG. 8, the terminal device 500 may further include a transceiver 530, and the processor 510 may control the transceiver 530 to communicate with other devices. Specifically, the transceiver 630 may send information or data to other devices or receive information or data sent by other devices.

Herein, the transceiver 530 may include a transmitter and a receiver. The transceiver 530 may also further include an antenna, and a quantity of antennas may be one or more.

Optionally, the terminal device 500 may be specifically a terminal device of an implementation of the present application, and the terminal device 500 may implement corresponding processes implemented by the first terminal device in the various methods of implementations of the present application, which will not be repeated here for brevity.

In a specific implementation, the processing unit in the terminal device 300/ terminal device 400 may be implemented by the processor 510 in FIG. 8. The transceiver unit in the terminal device 300/ terminal device 400 may be implemented by the transceiver 530 in FIG. 8.

FIG. 9 is a schematic diagram of structure of a chip according to an implementation of the present application. A chip 600 shown in FIG. 9 includes a processor 610. The processor 610 may call and run a computer program from a memory to implement the methods in the implementations of the present application.

Optionally, as shown in FIG. 9, the chip 600 may further include a memory 620. Herein, the processor 610 may call and run a computer program from the memory 620 to implement the methods in the implementations of the present application.

Herein, the memory 620 may be a separate device independent of the processor 610 or may be integrated in the processor 610.

Optionally, the chip 600 may further include an input interface 630. Herein, the processor 610 may control the input interface 630 to communicate with other device or chip. Specifically, information or data sent by other device or chip may be acquired.

Optionally, the chip 600 may further include an output interface 640. Herein, the processor 610 may control the output interface 640 to communicate with other device or chip. Specifically, information or data may be outputted to other device or chip.

Optionally, the chip may be applied to a terminal device in an implementation of the present application, and the chip may implement corresponding processes implemented by the terminal device in various methods of the implementations of the present application, which will not be repeated here for brevity.

It should be understood that the chip mentioned in the implementation of the present application may also be referred to as a system-level chip, a system chip, a chip system or a system chip-on-chip, etc.

FIG. 10 is a schematic block diagram of a communication system 700 according to an implementation of the present application. As shown in FIG. 10, the communication system 700 includes a first terminal device 710 and a second terminal device 720.

The first terminal device 710 may be configured to implement corresponding functions implemented by the first terminal device in the above-mentioned methods, and the second terminal device 720 may be configured to implement corresponding functions implemented by the second terminal device in the above-mentioned methods, which will not be repeated here for brevity.

It should be understood that the terms "system" and "network" herein are often used interchangeably in this document. The term "and/or" in this document is merely an association relationship describing associated objects, indicating that there may be three relationships, for example, A and/or B may indicate three cases: A alone, both of A and B, and B alone. In addition, the symbol "/" in this document generally indicates that objects before and after the symbol "/" have an "or" relationship.

It should be understood that, the processor in the implementations of the present application may be an integrated circuit chip having a signal processing capability. In an implementation process, the acts of the foregoing method implementations may be accomplished by an integrated logic circuit of hardware in the processor or instructions in a form of software. The above processor may be a general purpose processor, a Digital Signal Processor (DSP), an Application Specific Integrated Circuit (ASIC), a Field Programmable Gate Array (FPGA) or other programmable logic device, a discrete gate or a transistor logic device, or a discrete hardware component, which can implement or perform the methods, acts and logical block diagrams disclosed in the implementations of the present application. The general purpose processor may be a microprocessor, or the processor may also be any conventional processor or the like. The acts of the methods disclosed with reference to the implementations of the present application may be directly embodied as being executed and accomplished by a hardware decoding processor, or being executed and accomplished by a combination of hardware and software modules in a decoding processor. The software modules may be located in a storage medium commonly used in the art, such as a random access memory, a flash memory, a read-only memory, a programmable read-only memory or an electrically erasable programmable memory, or a register, etc. The storage medium is located in a memory, and the processor reads information in the memory and accomplishes the acts of the above methods in combination with hardware thereof.

It may be understood that, the memory in the implementations of the present application may be a volatile memory or a non-volatile memory, or may include both of a volatile memory and a non-volatile memory. Herein, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. Through illustrative but not limitative description, many forms of RAMs are available, for example, a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that memories in the systems and methods described in this specification are intended to include, but are not limited to, these and any other suitable types of memories.

It should be understood that, the foregoing memory is illustrative but not limitative description. For example, the memory in the implementations of the present application may also be a Static RAM (SRAM), a Dynamic RAM (DRAM), a Synchronous DRAM (SDRAM), a double data rate SDRAM (DDR SDRAM), an enhanced SDRAM (ESDRAM), or a synchlink DRAM (SLDRAM), a Direct Rambus RAM (DR RAM), or the like. That is, memories in the implementations of the present application are intended to include, but are not limited to, these and any other suitable types of memories.

An implementation of the present application further provides a computer readable storage medium, configured to store a computer program.

Optionally, the computer readable storage medium may be applied in a network device of the implementations of the present application, and when the computer program is run on a computer, the computer is enabled to perform corresponding processes implemented by the network device in various methods of the implementations of the present application, which will not be repeated here for brevity.

Optionally, the computer readable storage medium may be applied in a terminal device of the implementations of the present application, and when the computer program is run on a computer, the computer is enabled to perform corresponding processes implemented by the mobile terminal/terminal device in various methods of the implementations of the present application, which will not be repeated here for brevity.

An implementation of the present application further provides a computer program product, including computer program instructions.

Optionally, the computer program product may be applied in a network device of the implementations of the present application, and when the computer program instructions are executed by a computer, the computer is enabled to perform corresponding processes implemented by the network device in various methods of the implementations of the present application, which will not be repeated here for brevity.

Optionally, the computer program product may be applied in a terminal device of the implementations of the present application, and when the computer program instructions are executed by a computer, the computer is enabled to perform corresponding processes implemented by the mobile terminal/terminal device in various methods according to the implementations of the present application, which will not be repeated here for brevity.

An implementation of the present application further provides a computer program.

Optionally, the computer program may be applied in a network device of the implementations of the present application. When the computer program is run on a computer, the computer is enabled to perform corresponding processes implemented by the network device in various methods of the implementations of the present application, which will not be repeated here for brevity.

Optionally, the computer program may be applied in a terminal device of the implementations of the present application. When the computer program is run on the computer, the computer is enabled to perform corresponding processes implemented by the terminal device in various methods of implementations of the present application, which will not be repeated here for brevity.

Those of ordinary skill in the art will recognize that the example units and algorithm acts described in combination with the implementations disclosed herein can be implemented in electronic hardware, or a combination of computer software and electronic hardware. Whether these functions being executed in a hardware or software mode depend on a specific application and design constraint condition of the technical solution. Skilled artisans may use different methods to implement the described functions in respect to each particular application, but such implementation should not be considered to be beyond the scope of the present application.

Those skilled in the art may clearly understand that for convenience and conciseness of description, specific working processes of the systems, the apparatuses and the units described above may refer to the corresponding processes in the method implementations, which will not be repeated here.

In several implementations provided by the present application, it should be understood that the disclosed systems, apparatuses and methods may be implemented in other ways. For example, the apparatus implementations described above are only illustrative, for example, the division of the units is only a logical function division, and there may be other division modes in an actual implementation, for example, multiple units or components may be combined or integrated into another system, or some features may be ignored or not executed. On the other hand, the displayed or discussed mutual coupling or direct coupling or communication connection may be indirect coupling or communication connection through some interface, apparatuses or units. The indirect couplings or communication connections between apparatuses or units may be in electrical, mechanical or other forms.

The unit described as a separate component may or may not be physically separated, and the component shown as a unit may or may not be a physical unit, i.e., it may be located in one place or may be distributed over multiple network units. Some or all of the units therein may be selected according to an actual need to achieve the purpose of the solutions of the present implementations.

In addition, various functional units in various implementations of the present application may be integrated in one processing unit, or the various units may be physically present separately, or two or more units may be integrated in one unit.

When the functions are implemented in the form of software functional units and sold or used as an independent product, the software functional units may be stored in a computer-readable storage medium. Based on such an understanding, the technical solution of the present application, in essence, or the part contributing to the prior art, or the part of the technical solution, may be embodied in the form of a software product stored in a storage medium. The computer software product includes several instructions for instructing a computer device (which may be a personal computer, a server, or a network device, or the like) to perform all or part of the acts of the method described in various implementations of the present application. The foregoing storage medium includes: any medium that can store program codes, such as a USB flash drive, a removable hard disk, a Read-Only Memory (ROM), a Random Access Memory (RAM), a magnetic disk, or an optical disc.

The foregoing descriptions are merely specific implementations of the present application, but the protection scope of the present application is not limited thereto. Any variation or substitution that may be readily conceived by a person skilled in the art within the technical scope disclosed by the present application shall fall within the protection scope of the present application. Therefore, the protection scope of the present application shall be subjected to the protection scope of the claims.

**Claims**

**1.** A sidelink communication method, comprising:

receiving, by a first terminal device, a physical sidelink shared channel, PSSCH, sent by a second terminal device;
obtaining, by the first terminal device, sidelink control information, SCI, sent by the second terminal device;
**characterized by** determining, by the first terminal device, a transmission resource of a sidelink reference signal according to a transmission resource of the PSSCH when the SCI indicates to send the sidelink reference signal.

**2.** The method of claim 1, wherein the SCI comprises an indication field of 1 bit, value 1 represents to send, and value 0 represents not to send.

3. The method of claim 1 or 2, wherein determining, by the first terminal device, the transmission resource of the sidelink reference signal according to the transmission resource of the PSSCH, comprises:

   determining, by the first terminal device, a time domain resource of the sidelink reference signal according to a time domain resource of the PSSCH; and/or
   determining, by the first terminal device, a frequency domain resource of the sidelink reference signal according to a frequency domain resource of the PSSCH.

4. The method of claim 3, wherein determining, by the first terminal device, the time domain resource of the sidelink reference signal according to the time domain resource of the sidelink channel, comprises:
   determining, by the first terminal device, a slot in which the sidelink reference signal is located according to a slot in which the sidelink channel is located.

5. The method of claim 3, wherein determining, by the first terminal device, the frequency domain resource of the sidelink reference signal according to the frequency domain resource of the sidelink channel, comprises:

   determining, by the first terminal device, a frequency domain starting position of the sidelink reference signal according to a frequency domain starting position of the sidelink channel; and/or
   determining, by the first terminal device, a frequency domain resource length of the sidelink reference signal according to a frequency domain resource length of the sidelink channel.

6. The method of any one of claims 1 to 5, further comprising:
   determining, by the first terminal device, at least one type of following information: a time domain symbol occupied by the sidelink reference signal in a slot, a frequency domain starting position of the sidelink reference signal, and a frequency domain resource length of the sidelink reference signal, according to pre-configuration information, or configuration information of a terminal device except for the first terminal device.

7. The method of any one of claims 1 to 6, wherein the sidelink reference signal comprises a sidelink channel state information reference signal, CSI-RS, or a sidelink phase tracking reference signal, PT-RS.

8. A terminal device, wherein the terminal device is a first terminal device, comprising a transceiving unit (310) and a processing unit (320), wherein

   the transceiving unit (310) is configured to receive a physical sidelink shared channel, PSSCH, sent by a second terminal device;
   wherein the processing unit (320) is configured to obtain sidelink control information, SCI, sent by the second terminal device; **characterized in that** the processing unit (320) is configured to determine a transmission resource of a sidelink reference signal according to a transmission resource of the PSSCH when the SCI indicates to send the sidelink reference signal.

9. The terminal of claim 8, wherein the SCI comprises an indication field of 1 bit, value 1 represents to send, and value 0 represents not to send.

10. The terminal of claim 8 or 9, wherein the sidelink reference signal comprises a sidelink channel state information reference signal, CSI-RS, or a sidelink phase tracking reference signal, PT-RS.


**Patentansprüche**

1. Sidelink-Kommunikationsverfahren, das Folgendes umfasst:

   Empfangen eines durch eine zweite Endgerätvorrichtung gesendeten gemeinsam verwendeten physischen Sidelink-Kanals, PSSCH, durch eine erste Endgerätvorrichtung;
   Erhalten von durch die zweite Endgerätvorrichtung gesendeten Sidelink-Steuerinformationen, SCI, durch die erste Endgerätvorrichtung; **gekennzeichnet durch** das Bestimmen eines Übertragungsbetriebsmittels eines Sidelink-Referenzsignals gemäß einem Übertragungsbetriebsmittel des PSSCH durch die erste Endgerätvorrichtung, wenn die SCI angeben, das Sidelink-Referenzsignal zu senden.

2. Verfahren nach Anspruch 1, wobei die SCI ein 1-Bit-Anzeigefeld umfassen, wobei der Wert 1 Senden repräsentiert und der Wert 0 Nicht-Senden repräsentiert.

3. Verfahren nach Anspruch 1 oder 2, wobei das Bestimmen des Übertragungsbetriebsmittels des Sidelink-Referenzsignals durch die erste Endgerätvorrichtung gemäß dem Übertragungsbetriebsmittel des PSSCH Folgendes umfasst:

Bestimmen eines Zeitdomänenbetriebsmittels des Sidelink-Referenzsignals gemäß einem Zeitdomänenbetriebsmittel des PSSCH durch die erste Endgerätvorrichtung; und/oder
Bestimmen eines Frequenzdomänenbetriebsmittels des Sidelink-Referenzsignals gemäß einem Frequenzdomänenbetriebsmittel des PSSCH durch die erste Endgerätvorrichtung.

4. Verfahren nach Anspruch 3, wobei das Bestimmen des Zeitdomänenbetriebsmittels des Sidelink-Referenzsignals durch die erste Endgerätvorrichtung gemäß dem Zeitdomänenbetriebsmittel des Sidelink-Kanals Folgendes umfasst:
Bestimmen eines Schlitzes, in dem sich das Sidelink-Referenzsignal befindet, gemäß einem Schlitz, in dem sich der Sidelink-Kanal befindet, durch die erste Endgerätvorrichtung.

5. Verfahren nach Anspruch 3, wobei das Bestimmen des Frequenzdomänenbetriebsmittels des Sidelink-Referenzsignals gemäß dem Frequenzdomänenbetriebsmittel des Sidelink-Kanals durch die erste Endgerätvorrichtung Folgendes umfasst:

Bestimmen einer Frequenzdomänenstartposition des Sidelink-Referenzsignals gemäß einer Frequenzdomänenstartposition des Sidelink-Kanals durch die erste Endgerätvorrichtung; und/oder
Bestimmen einer Frequenzdomänenbetriebsmittellänge des Sidelink-Referenzsignals gemäß einer Frequenzdomänenbetriebsmittellänge des Sidelink-Kanals durch die erste Endgerätvorrichtung.

6. Verfahren nach einem der Ansprüche 1 bis 5, das ferner Folgendes umfasst:
Bestimmen wenigstens eines Typs der folgenden Informationen durch die erste Endgerätvorrichtung: eines Zeitdomänensymbols, das durch das Sidelink-Referenzsignal in einem Schlitz besetzt ist, einer Frequenzdomänenstartposition des Sidelink-Referenzsignals und einer Frequenzdomänenbetriebsmittellänge des Sidelink-Referenzsignals gemäß Vorkonfigurationsinformationen oder Konfigurationsinformationen einer Endgerätvorrichtung mit Ausnahme der ersten Endgerätvorrichtung.

7. Verfahren nach einem der Ansprüche 1 bis 6, wobei das Sidelink-Referenzsignal ein Sidelink-Kanalzustandsinformations-Referenzsignal, Sidelink-CSI-RS, oder ein Sidelink-Phasennachführungs-Referenzsignal, Sidelink-PT-RS, umfasst.

8. Endgerätvorrichtung, wobei die Endgerätvorrichtung eine erste Endgerätvorrichtung ist, die eine Sende/Empfangseinheit (310) und eine Verarbeitungseinheit (320) umfasst, wobei

die Sende/Empfangseinheit (310) konfiguriert ist, einen durch eine zweite Endgerätvorrichtung gesendeten gemeinsam verwendeten physischen Sidelink-Kanal, PSSCH, zu empfangen;
wobei die Verarbeitungseinheit (320) konfiguriert ist, durch die zweite Endgerätvorrichtung gesendete Sidelink-Steuerinformationen, SCI, zu erhalten;
**dadurch gekennzeichnet, dass** die Verarbeitungseinheit (320) konfiguriert ist, ein Übertragungsbetriebsmittel eines Sidelink-Referenzsignals gemäß einem Übertragungsbetriebsmittel des PSSCH zu bestimmen, wenn die SCI angeben, das Sidelink-Referenzsignal zu senden.

9. Endgerät nach Anspruch 8, wobei die SCI ein 1-Bit-Anzeigefeld umfassen, wobei der Wert 1 Senden repräsentiert und der Wert 0 Nicht-Senden repräsentiert.

10. Endgerät nach Anspruch 8 oder 9, wobei das Sidelink-Referenzsignal ein Sidelink-Kanalzustandsinformations-Referenzsignal, Sidelink-CSI-RS, oder ein Sidelink-Phasennachführungs-Referenzsignal, Sidelink-PT-RS, umfasst.

**Revendications**

1. Procédé de communication sur la liaison latérale, comprenant :

   la réception, par un premier dispositif terminal, d'un canal physique partagé sur la liaison latérale, noté PSSCH, envoyé par un deuxième dispositif terminal ;
   l'obtention, par le premier dispositif terminal, d'informations de contrôle sur la liaison latérale, notées SCI, envoyées par le deuxième dispositif terminal ; **caractérisé par** la détermination, par le premier dispositif terminal, d'une ressource de transmission d'un signal de référence sur la liaison latérale selon une ressource de transmission du PSSCH lorsque les SCI indiquent d'envoyer le signal de référence sur la liaison latérale.

2. Procédé selon la revendication 1, dans lequel les SCI comprennent un champ d'indication de 1 bit, la valeur 1 indiquant d'envoyer, la valeur 0 indiquant de ne pas envoyer.

3. Procédé selon la revendication 1 ou 2, dans lequel la détermination, par le premier dispositif terminal, de la ressource de transmission du signal de référence sur la liaison latérale selon la ressource de transmission du PSSCH comprend :

   la détermination, par le premier dispositif terminal, d'une ressource dans le domaine temporel du signal de référence sur la liaison latérale selon une ressource dans le domaine temporel du PSSCH ; et/ou
   la détermination, par le premier dispositif terminal, d'une ressource dans le domaine fréquentiel du signal de référence sur la liaison latérale selon une ressource dans le domaine fréquentiel du PSSCH.

4. Procédé selon la revendication 3, dans lequel la détermination, par le premier dispositif terminal, de la ressource dans le domaine temporel du signal de référence sur la liaison latérale selon la ressource dans le domaine temporel du canal sur la liaison latérale comprend :
   la détermination, par le premier dispositif terminal, d'un slot dans lequel se trouve le signal de référence sur la liaison latérale selon un slot dans lequel se trouve le canal sur la liaison latérale.

5. Procédé selon la revendication 3, dans lequel la détermination, par le premier dispositif terminal, de la ressource dans le domaine fréquentiel du signal de référence sur la liaison latérale selon la ressource dans le domaine fréquentiel du canal sur la liaison latérale comprend :

   la détermination, par le premier dispositif terminal, d'une position de début dans le domaine fréquentiel du signal de référence sur la liaison latérale selon une position de début dans le domaine fréquentiel du canal sur la liaison latérale ; et/ou
   la détermination, par le premier dispositif terminal, d'une longueur de ressource dans le domaine fréquentiel du signal de référence sur la liaison latérale selon une longueur de ressource dans le domaine fréquentiel du canal sur la liaison latérale.

6. Procédé selon l'une quelconque des revendications 1 à 5, comprenant en outre :
   la détermination, par le premier dispositif terminal, d'au moins un type des informations suivantes : un symbole dans le domaine temporel occupé par le signal de référence sur la liaison latérale dans un slot, une position de début dans le domaine fréquentiel du signal de référence sur la liaison latérale, et une longueur de ressource dans le domaine fréquentiel du signal de référence sur la liaison latérale, selon des informations de préconfiguration ou des informations de configuration d'un dispositif terminal hormis le premier dispositif terminal.

7. Procédé selon l'une quelconque des revendications 1 à 6, dans lequel le signal de référence sur la liaison latérale comprend un signal de référence d'informations d'état de canal, noté CSI-RS, sur la liaison latérale ou un signal de référence de suivi de phase, noté PT-RS, sur la liaison latérale.

8. Dispositif terminal, le dispositif terminal étant un premier dispositif terminal, comprenant une unité émettrice-réceptrice (310) et une unité de traitement (320),

   l'unité émettrice-réceptrice (310) étant configurée pour recevoir un canal physique partagé sur la liaison latérale, noté PSSCH, envoyé par un deuxième dispositif terminal ;
   l'unité de traitement (320) étant configurée pour obtenir des informations de contrôle sur la liaison latérale, notées SCI, envoyées par le deuxième dispositif terminal ;

**caractérisé en ce que** l'unité de traitement (320) est configurée pour déterminer une ressource de transmission d'un signal de référence sur la liaison latérale selon une ressource de transmission du PSSCH lorsque les SCI indiquent d'envoyer le signal de référence sur la liaison latérale.

9. Terminal selon la revendication 8, dans lequel les SCI comprennent un champ d'indication de 1 bit, la valeur 1 indiquant d'envoyer, la valeur 0 indiquant de ne pas envoyer.

10. Terminal selon la revendication 8 ou 9, dans lequel le signal de référence sur la liaison latérale comprend un signal de référence d'informations d'état de canal, noté CSI-RS, sur la liaison latérale ou un signal de référence de suivi de phase, noté PT-RS, sur la liaison latérale.

FIG. 1

FIG. 2

FIG. 3

Slot 0 | Slot 1 | Slot 2 | Slot 3

f

t

PSCCH  PSSCH  CSI-RS

FIG. 4

200

A second terminal device determines a transmission resource of a sidelink reference signal according to a transmission resource of a sidelink channel  — S210

The second terminal device receives the sidelink reference signal on the transmission resource of the sidelink reference signal  — S220

FIG. 5

Terminal device 300

Transceiving unit 310

Processing unit 320

FIG. 6

Terminal device 400

Processing unit 410

Transceiving unit 420

FIG. 7

Terminal device
500

Memory
520

Processor
510

Transceiver
530

FIG. 8

Chip 600

Input
interface
630

Processor
610

Memory
620

Output
interface
640

FIG. 9

Communication system 700

A first
terminal
device

710

A second
terminal
device

720

FIG. 10

**EP 3 890 415 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20180107995 A
- WO 2018177141 A1

- EP 3579658 A1

**Non-patent literature cited in the description**

- **ERICSSON.** On SCI formats. *3GPP DRAFT; R1-1813649,* 11 November 2018, vol. RAM WG1